# EUROPEAN PATENT APPLICATION

(11) **EP 4 600 208 A1**
(43) Date of publication of application: **13.08.2025**
(21) Application number: 23874741.4
(22) Date of filing: 27.09.2023
(51) Int. Cl.: C01B 32/15, G01N 23/02, G01N 23/05

(54) **CARBON STRUCTURE**

(30) Priority: 06.10.2022 JP 2022161968
(71) Applicant: Incubation Alliance, Inc., Kobe-shi, Hyogo 652-0884 (JP); Japan Atomic Energy Agency, Ibaraki 319-1184 (JP); RIKEN, Wako-shi, Saitama 351-0198 (JP)
(72) Inventor: MURAMATSU, Kazuo, Kobe-shi, Hyogo 652-0884 (JP); IWATA, Hidesato, Kobe-shi, Hyogo 652-0884 (JP); TAKAHASHI, Kazuma, Kobe-shi, Hyogo 652-0884 (JP); SUTANI, Koichi, Kobe-shi, Hyogo 652-0884 (JP); TESHIGAWARA, Makoto, Mito-shi, Ibaraki 310-0804 (JP); SARUTA, Koichi, Mito-shi, Ibaraki 310-0804 (JP); IKEDA, Yujiro, Wako-shi, Saitama 351-0198 (JP); OTAKE, Yoshie, Wako-shi, Saitama 351-0198 (JP)
(74) Representative: KIPA AB
(86) International application number: PCT/JP2023/035241
(87) International publication number: WO 2024/075614

(57) **Abstract**

Provided is a three-dimensional shaped carbon structure comprising a nanocarbon structure, the nanocarbon structure comprising at least one of a petal-shaped structure with flaky carbons fixed into a petal shape, each of the flaky carbons having a graphene skeleton and a thickness of less than 20 nm; and a projected-and-recessed structure formed by an assembly of seed-shaped structures, each of the seed-shaped structures having a size of 1 to 100 nm. The carbon structure has a good formability and an excellent durability in high radiation fields, and is further useful as a reflector of a cold neutron or an extremely cold neutron that can achieves high strengths of the cold neutron and the extremely cold neutron through coherent scattering.

## Description

### TECHNICAL FIELD

The present invention relates to a carbon structure. In more detail, the present invention relates to a three-dimensional shaped carbon structure that can achieve a high strength of a cold neutron or an extremely cold neutron expected to be utilized in a wide range of fields, such as structural analysis of materials, life sciences, medicine, and the like, through coherent scattering.

### BACKGROUND ART

A cold neutron (0.1 to 5 meV) has a long wavelength and is suitable for studying a structure of a material, and its use has been increasing in fields such as structural analyses of a high-temperature superconductor, a biological material, and the like. Moreover, an extremely cold neutron (0.5 µeV to less than 0.1 meV) is useful for studying actions of four forces that exist in nature, etc.

Nanodiamond (ND) has been attracting attention as a material that achieves a high strength of neutrons including a cold neutron (Non-Patent Document 1).

### PRIOR ART DOCUMENT

### Non-patent Document

Non-patent Document 1: M. Teshigawara, et al., Nuclear Inst. and Method in Physics Research, A 929 (2019) 113-120

### SUMMARY OF THE INVENTION

### PROBLEMS TO BE SOLVED BY THE INVENTION

However, when utilizing nanodiamond as a reflector for a neutron, it is difficult to form it into a structure that retains sufficient thickness and volume along a moderator or a neutron extraction surface due to its poor formability. Moreover, the reflector for a neutron is required to have durability in high radiation fields.

It is an object of the present invention to provide a reflector for a cold neutron or an extremely cold neutron that has a good formability, can achieve a high strength of the cold neutron or the extremely cold neutron through coherent scattering, and can also be expected to have durability in high radiation fields.

### MEANS TO SOLVE THE PROBLEM

As a result of intensive studies for solving the above-described problems, the present inventors have found that the above-described problems can be solved by using a three-dimensional shaped carbon structure having at least one of a petal-shaped structure with flaky carbons fixed into a petal shape, each of the flaky carbons having a graphene skeleton and a thickness of less than a predetermined thickness; and a projected-and-recessed structure formed by an assembly of seed-shaped structures, each of the seed-shaped structures having a predetermined size, and conducted further studies to complete the present invention.

That is, the present invention relates to:
a three-dimensional shaped carbon structure comprising a nanocarbon structure, the nanocarbon structure comprising at least one of:
a petal-shaped structure with flaky carbons fixed into a petal shape, each of the flaky carbons having a graphene skeleton and a thickness of less than 20 nm, and
a projected-and-recessed structure formed by an assembly of seed-shaped structures, each of the seed-shaped structures having a size of 1 to 100 nm.

### EFFECTS OF THE INVENTION

According to the present invention, a reflector for a cold neutron or an extremely cold neutron can be provided which has a good formability, can achieve a high strength of the cold neutron or the extremely cold neutron through coherent scattering, and can also be expected to have durability in high radiation fields.

### BRIEF DESCRIPTION OF THE DRAWINGS

FIG. 1 is a schematic view showing a structure of a muffle furnace.
FIG. 2 is an SEM image of a nanocarbon structure 1.
FIG. 3 is an SEM image of a nanocarbon structure 1.
FIG. 4 is an SEM image of a nanocarbon structure 2.
FIG. 5 is an SEM image of a nanocarbon structure 2.
FIG. 6 is an SEM image of a nanocarbon structure 2.
FIG. 7 is an SEM image of a nanocarbon structure 2.
FIG. 8 is an SEM image of a nanocarbon structure 2.
FIG. 9 is an SEM image of a nanocarbon structure 2.
FIG. 10 is an SEM image of a nanocarbon structure 2.
FIG. 11 is an SEM image of a nanocarbon structure 2.
FIG. 12 is an SEM image of a nanocarbon structure 2.
FIG. 13 is an SEM image of a thermally expanded graphite.
FIG. 14 is an SEM image of a graphene aggregate.
FIG. 15 is a photograph of a three-dimensional shaped carbon structure 3.
FIG. 16 is a photograph of a three-dimensional shaped carbon structure 4.
FIG. 17 is a photograph of a three-dimensional shaped carbon structure 5.
FIG. 18 is a photograph of a three-dimensional shaped carbon structure 6.
FIG. 19 is a photograph of a three-dimensional shaped carbon structure 7.
FIG. 20 is an SEM image of a three-dimensional shaped carbon structure 4.
FIG. 21 is an SEM image of a three-dimensional shaped carbon structure 6.
FIG. 22 is an SEM image of a three-dimensional shaped carbon structure 7.
FIG. 23 is an SEM image of a three-dimensional shaped carbon structure 7.
FIG. 24 is an SEM image of a three-dimensional shaped carbon structure 7.
FIG. 25 is an SEM image of a three-dimensional shaped carbon structure 7.
FIG. 26 is a schematic view showing an example of a shape of a three-dimensional shaped carbon structure.
FIG. 27 is a graph plotting an energy-dependent neutron transmittance for each sample tested.

### EMBODIMENT FOR CARRYING OUT THE INVENTION

The three-dimensional shaped carbon structure of the present invention, that is, the three-dimensional shaped carbon structure comprising a nanocarbon structure will be described below. Here, the nanocarbon structure comprises at least one of a petal-shaped structure with flaky carbons fixed into a petal shape, the flaky carbons having a graphene skeleton and a thickness of less than 20 nm; and a projected-and-recessed structure formed by an assembly of seed-shaped structures, each of the seed-shaped structures having a size of 1 to 100 nm.

Although it is not intended to be bound by a theory, a reason why the three-dimensional shaped carbon structure of the present invention has a good formability, can achieve a high strength of the cold neutron or the extremely cold neutron through coherent scattering, and can also be expected to have durability in high radiation fields is considered as follows.

The three-dimensional shaped carbon structure of the present invention includes a nanocarbon structure that has at least one of a petal-shaped structure with flaky carbons fixed into a petal shape, each of the flaky carbons having a graphene skeleton and a thickness of less than 20 nm; and a projected-and-recessed structure formed by an assembly of seed-shaped structures, each of the seed-shaped structures having a size of 1 to 100 nm. Such a nano-sized microstructure is considered to have a size suitable for interacting with a wavelength of a cold neutron or an extremely cold neutron, which is therefore considered to cause coherent scattering of the cold neutron or the extremely cold neutron.

Moreover, in a producing process of the three-dimensional shaped carbon structure in the present specification, a graphene aggregate or the like is used as a carbon binder in a step of obtaining a three-dimensional structure in such a way as to mix this carbon binder with a nanocarbon structure and to subject the mixture to compression-molding. In this case, a strong van der Waals force resulting from graphene of the carbon binder bonds nanocarbon structures together. On the other hand, this carbon binder itself is a nano-sized carbon material having graphene, and, therefore, is considered to provide formability while minimizing an invalidating effect against the petal-shaped structure or the projected-and-recessed structure of the nanocarbon structures. Besides, as the carbon binder is not essential as a component of the present invention, the carbon binder is not necessary when, for example, the nanocarbon structure itself functions as the three-dimensional shaped carbon structure of the present invention.

Furthermore, the three-dimensional shaped carbon structure of the present invention is composed of a carbon material having graphene, which has a high crystal structure strength as a skeleton, so that it is considered to have an excellent durability in high radiation fields. That is, the graphite structure relating to the graphene skeleton is formed by sp2 carbon bonds, which means that electrons not involved in the sp2 carbon bonds are present in delocalized states. It is considered that the presence of these delocalized electrons contributes to exhibition of durability in high radiation fields, as compared with a case for sp3 carbon bonds of diamond, etc.

### <Definition>

A "thickness of a carbon structure" refers to a length of the carbon structure in a z-axis direction under three mutually orthogonal coordinate axes (x-axis, y-axis, z-axis) in a three-dimensional space, where an x-axis direction represents a long axis direction of the carbon structure and a y-axis direction represents a short axis direction of the carbon structure. However, each length of the "long axis", "short axis" and "thickness" shall be in the order of long axis>short axis>thickness. Besides, when it is difficult to recognize a thickness of the carbon structure under the above-described method, the thickness of the carbon structure refers to the maximum diameter of the carbon structure in a direction perpendicular to both a long axis and a short axis, where the long axis represents the maximum diameter of the carbon structure and the short axis represents the maximum diameter of the carbon structure in a direction perpendicular to the long axis.

A "tap density" is a density measured for powder. A measuring method of the tap density is performed, for example, by collecting powder (a thermally expanded graphite, etc.) in a plastic measuring cup with a volume of 100 cm³ (whose mass has been measured in advance), rubbing off the top of the cup using a glass rod with an outer diameter of 10 mm to remove excess powder, determining a mass of the powder by measuring it together with the measuring cup using a balance (for example, an analytical electronic balance HTR-80 (manufactured by SHINKO DENSHI CO.,LTD., analytical accuracy: 0.1 mg)), and then dividing the mass of the powder by 100 cm³ to obtain a value of the tap density.

A "bulk density" is a mass per unit volume (g/cm³) calculated by dividing a measured mass by a volume calculated from an external dimension (shape).

A "G band" is one of characteristic peaks that appears near 1580 cm⁻¹ in the Raman spectrum of graphene, which is a peak derived from a stacking structure of graphene. The more normal the stacking structure of graphene is, the higher the peak value tends to become. "Near 1580 cm⁻¹" means that a shift of ±100 cm⁻¹ is permitted.

A "D band" is one of characteristic peaks that appears near 1360 cm⁻¹ in the Raman spectrum of graphene, which is a peak derived from a disturbance and a defect of a stacking structure of graphene. As the disturbance and the defect increase, the peak value tends to become higher. "Near 1360 cm⁻¹" means that a shift of ±100 cm⁻¹ is permitted.

A "2D band" is one of characteristic peaks that appears near 2700 cm⁻¹ in the Raman spectrum of graphene, which is correlated with the number of stacking layers of graphene. As the number of stacking layers decreases, the peak value tends to become higher. The peak of the 2D band being near 2700 cm⁻¹ means that a shift of ±100 cm⁻¹ is permitted.

A "nanocarbon structure" is a carbon material that has at least one of a petal-shaped structure with flaky carbons fixed into a petal shape, each of the flaky carbons having a graphene skeleton and a thickness of less than 20 nm; and a projected-and-recessed structure formed by an assembly of seed-shaped structures, each of the seed-shaped structures having a size of 1 to 100 nm. Besides, the petal-shaped structure and the projected-and-recessed structure will be described below. In addition, the thickness of the flaky carbon may be less than 15 nm or may be less than 10 nm.

A "carbon binder" refers to a carbon material that acts as a binder to form a nanocarbon structure.

A "thermally expanded graphite" refers to graphite, in which a graphite particle formed by overlapping carbon hexagonal network surfaces, expands several hundred times in a thickness direction thereof. It can be produced by rapidly heating a graphite intercalation compound.

A "graphene aggregate" refers to an aggregate of graphene formed by deposition of single or multiple layers of graphene. Besides, in the present specification, the term "graphene" may be used to mean that it is not only of a single layer but also of multiple layers. Here, for graphene, the multiple layers means that the thickness is preferably less than 100 nm and the number of layers is 290 or less. The number of layers can be, for example, 200 layers or less, 100 layers or less, 50 layers or less, or 25 layers or less.

A diameter of the graphene aggregates includes a diameter of a primary particle in a dispersed state in a liquid (a primary diameter) and a diameter of a pulverized body of a deposit of the primary particle (a secondary diameter), which is obtained by removing the liquid from the dispersed state by filtration, and drying and pulverizing the resultant. The primary diameter is preferably 100 µm or less, more preferably 50 µm or less, further preferably 10 µm or less. Moreover, the secondary diameter is usually preferably 1 mm or less, more preferably 500 µm or less, more preferably 100 µm or less, further preferably 50 µm or less, though it depends on a shape of a nanocarbon structure to be molded. On the other hand, a lower limit of a diameter of the graphene aggregate is not particularly limited, and may be, for example, about 1 µm. Besides, the diameter of the graphene aggregate can be measured by observation with an electron microscope.

### <Carbon structure>

The three-dimensional shaped carbon structure of the present invention, which comprises a nanocarbon structure having a petal-shaped structure and/or a projected-and-recessed structure, will be described below.

The three-dimensional shaped carbon structure comprises a nanocarbon structure having at least one of a petal-shaped structure and a projected-and-recessed structure. Here, the nanocarbon structure preferably comprises a petal-shaped structure, and more preferably comprises both a petal-shaped structure and a projected-and-recessed structure.

### (Petal-shaped structure)

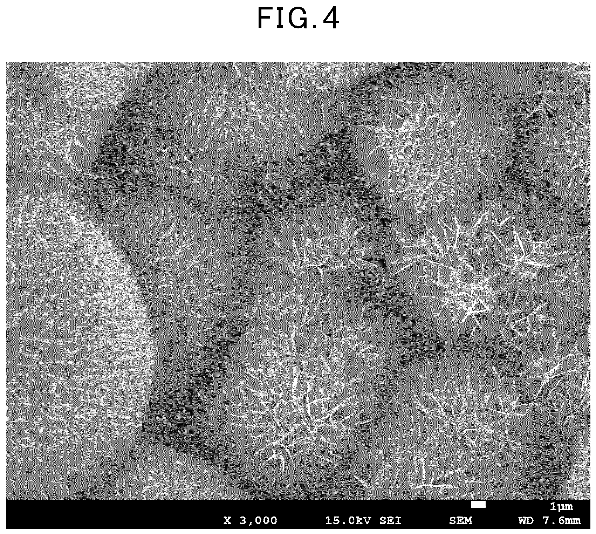

The petal-shaped structure in the present invention is a structure in which flaky carbons having a graphene skeleton and a thickness of less than 20 nm is fixed into a petal shape (FIGS. 4 to 6, etc.). Here, a lower limit of the thickness of the flaky carbon is, but not particularly limited to, equal to or greater than a thickness of a single layer of graphene (about 0.34 nm).

### (Projected-and-recessed structure)

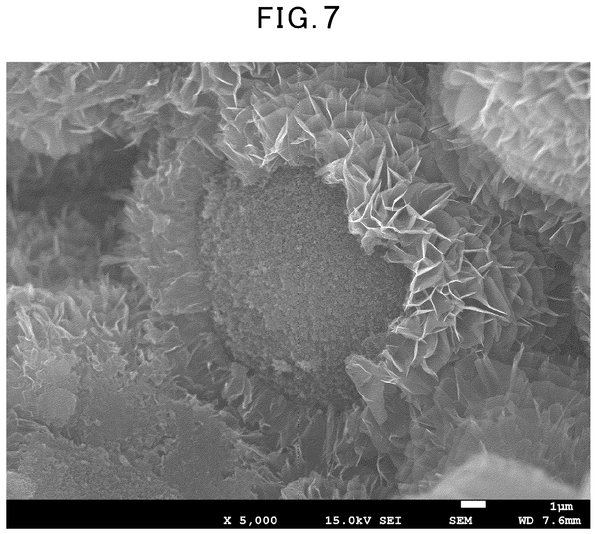

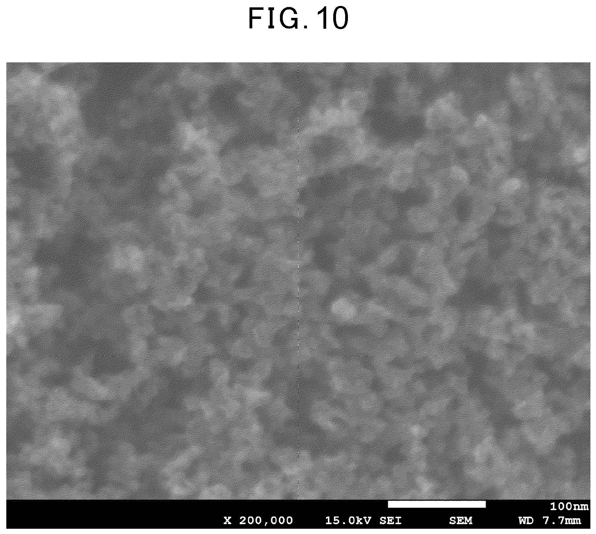

The projected-and-recessed structure in the present invention is a fine structure including projections and recesses formed by an assembly of seed-shaped structures having a size of 1 to 100 nm (FIGS. 7 to 12, etc.). Here, each size of the projections and recesses in the projected-and-recessed structure is preferably 1 nm or more. Each size of the projections and recesses can be 5 nm or more, or can be 10 nm or more. On the other hand, each size of the projections and recesses is preferably 90 nm or less, more preferably 80 nm or less, further preferably 70 nm or less, further preferably 60 nm or less, further preferably 50 nm or less, further preferably 40 nm or less, further preferably 30 nm or less. Each size of the projections and recesses is, for example, preferably in a range of 1 to 90 nm, more preferably 1 to 80 nm, further preferably 1 to 70 nm, further preferably 1 to 60 nm, further preferably 1 to 50 nm, further preferably 1 to 40 nm, further preferably 1 to 30 nm.

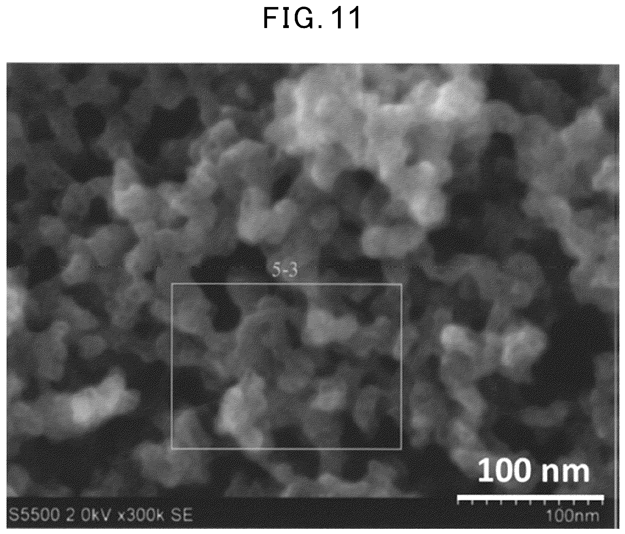

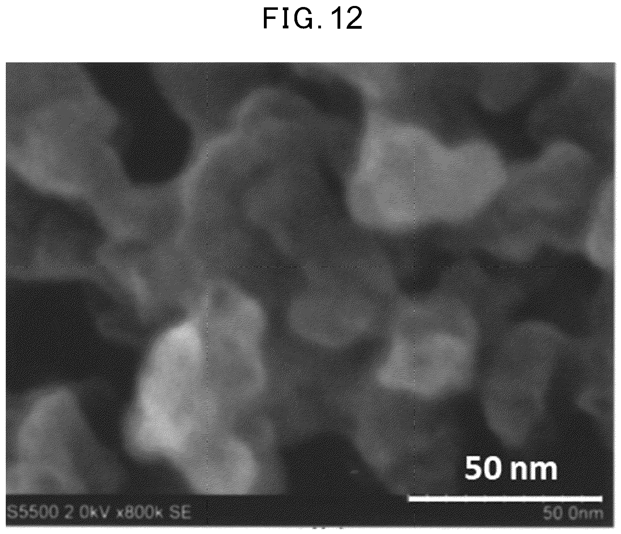

For example, in FIG. 11 (SEM observed at 300,000 magnification), a scale bar of 100 nm is shown, but it can be observed that granular and nodular shapes of 100 nm or less are coupled in bead-like, chain-like, and grape-like manners, and are present in linear, spiral, and radial shapes. FIG. 12 is a photograph of a portion enclosed by a square in FIG. 11, as enlarged 800,000 times. A scale bar of 50 nm is shown in FIG. 12, and it can be observed that there is also a projected-and-recessed structure in a range of 1 to 50 nm.

### (Three-dimensional shaped carbon structure)

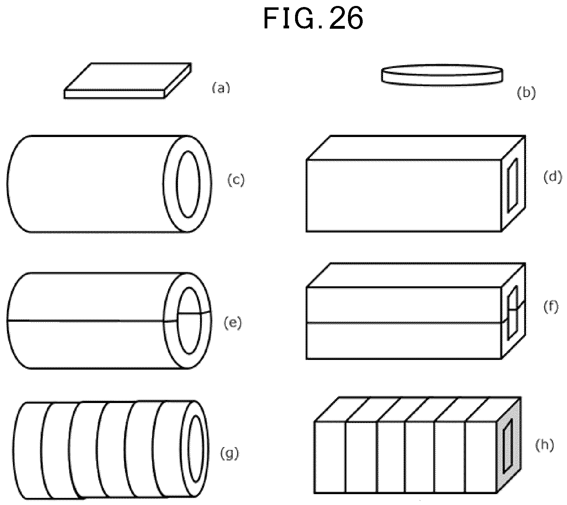

In the three-dimensional shaped carbon structure of the present invention, the three-dimensional shape is not particularly limited, and includes both a structure used to reflect a cold neutron or an extremely cold neutron and a shape that can be used as a part of the structure for configuration of the structure. For example, as shown in FIG. 26, specific examples of such a three-dimensional shape include, for example, a plate shape as in (a), a disk shape as in (b), a tube shape as in (c), a square tube shape as in (d), and the like. Furthermore, three-dimensional shape may be a shape of a divided piece obtained by dividing a tube shape as in (e) and may be a shape of a divided piece obtained by dividing a square tube shape as in (f). Alternatively, it may be a shape of a coupled body obtained by coupling a tube shape as in (g) and may be a shape of a coupled body obtained by coupling a square tube shape as in (h).

### (Bending strength)

As the three-dimensional shaped carbon structure of the present invention needs to be installed inside a neutron generator as a member, a reflector for a neutron, it needs to be able to be handled without being damaged or destroyed when it is handled, screwed and the like for fixing to the generator during production of generator. Moreover, the three-dimensional shaped carbon structure needs to be able to be used continuously without being destroyed or damaged due to vibration or the like when it is used continuously inside the generator as a reflector for a neutron. For this reason, the three-dimensional shaped carbon structure as a reflector for a neutron needs to have good formability and mechanical strength while comprising no binder other than carbon. From such a viewpoint, the three-dimensional shaped carbon structure of the present invention preferably has a bending strength of 0.5 MPa or more. This is because a certain degree of bending strength is required for use as a reflector for a cold neutron or an extremely cold neutron. The bending strength is preferably 0.7 MPa or more, more preferably 0.9 MPa or more, further preferably 1.0 MPa or more, further preferably 2.5 MPa or more. On the other hand, there is no particular upper limit to the bending strength, but it is usually about 10.0 MPa. Besides, the bending strength is measured by the method described in the Examples section.

### (Bulk density)

The three-dimensional shaped carbon structure of the present invention is characterized by having a desired nano-sized microstructure that efficiently scatters and reflects neutrons, and it is considered that the larger the amount of the microstructure present is, the better it is. Thus, it is preferable that the three-dimensional shaped carbon structure has as much of the desired microstructure as possible and has the desired mechanical strength. From the viewpoint that the three-dimensional shaped carbon structure has a good formability and a desired mechanical strength while comprising no binder other than carbon and further has an excellent neutron reflective capability, the bulk density is preferably 0.70 g/cm or more, more preferably 0.80 g/cm or more, further preferably 0.90 g/cm or more. On the other hand, there is no particular upper limit for the bulk density, and it is usually about 2.2 g/cm³, but from the viewpoint of neutron reflective capability, it may be 1.10 g/cm³ or less, 1.00 g/cm³ or less, 0.95 g/cm³ or less, or 0.91 g/cm³ or less. Besides, the bulk density is measured by the method described in the Examples section.

### (Raman spectroscopy)

In the three-dimensional shaped carbon structure of the present invention, it is preferable that a ratio G/D of a peak intensity of the G band to a peak intensity of the D band as obtained by Raman spectroscopy is 3.00 or more and a ratio G/2D of the peak intensity of the G band to a peak intensity of the 2D band is 3.00 or less.

Regarding G/D, the G band tends to have a higher peak value as the stacking structure of graphene is more normal, while the D band tends to have a higher peak value as the stacking structure of graphene has more increased disturbance and defects. Therefore, a higher G/D indicates that a more normal graphite structure is formed. G/D is preferably 3.30 or more, more preferably 4.30 or more, further preferably 5.30 or more, further preferably 6.30 or more, further preferably 6.90 or more. On the other hand, there is no particular upper limit for G/D, but it is usually about 12.00.

Regarding G/2D, the G band tends to have a higher peak value as the stacking structure of graphene is more normal, while the 2D band tends to have a higher peak value as the stacking structure of graphene has more decreased number of stacking layers of graphene. Therefore, a lower G/2D indicates that a thinner stacking structure of graphene (i.e., a structure closer to graphene) is formed. G/2D is preferably 3.00 or less, more preferably 2.50 or less, further preferably 2.00 or less, further preferably 1.93 or less, further preferably 1.50 or less, further preferably 1.00 or less. On the other hand, there is no particular lower limit for G/2D, but it is usually about 0.50.

Besides, the Raman spectroscopy is measured by the method described in the Examples section (microscopic laser Raman).

### (Thickness)

As the three-dimensional shaped carbon structure of the present invention, those having a variety of thicknesses are used depending on their applications, and thus, the thickness is not particularly limited. Then, since the three-dimensional shaped carbon structure of the present invention has a high formability, structures of various thicknesses can be made which are from thin to thick. For example, the three-dimensional shaped carbon structure may be 0.1 mm or more, 1.0 mm or more, 10 mm or more, or 100 mm or more. This is because it is suitable for use as a reflector for a cold neutron or an extremely cold neutron. On the other hand, there is no particular upper limit for the thickness, but it may usually be about 100 mm, may be about 400 mm, or may be about 800 mm.

### (Neutron transmittance)

The three-dimensional shaped carbon structure of the present invention preferably has a neutron transmittance of 80% or less for 0.5 meV neutrons. This is because it is suitable for use as a reflector for a cold neutron or an extremely cold neutron. The neutron transmittance is preferably 70% or less, more preferably 60% or less, further preferably 55% or less, further preferably 53% or less. On the other hand, there is no particular lower limit for the neutron transmittance, and the lower it is, the better it is, but in a case of nanodiamond, it is about 44%. Besides, the neutron transmittance is measured by the method described in the Examples section.

### <Producing method>

The three-dimensional shaped carbon structure of the present invention can be produced at least by the following method. That is, it can be produced by mixing a nanocarbon structure and a carbon binder as raw materials and then molding the mixture.

### (Nanocarbon structure)

The nanocarbon structure is a carbon material that has at least one of a petal-shaped structure with flaky carbons fixed into a petal shape, each of the flaky carbons having a graphene skeleton and a thickness of less than 20 nm; and a projected-and-recessed structure formed by an assembly of seed-shaped structures, each of the seed-shaped structures having a size of 1 to 100 nm. A significance of the petal-shaped structure and the projected-and-recessed structure is as described above. Moreover, the nanocarbon structure preferably comprises both the petal-shaped structure and the projected-and-recessed structure.

### (Carbon binder)

The carbon binder refers to a carbon material that acts as a binder to form a nanocarbon structure. Specific examples of the carbon binder suitable for obtaining the three-dimensional shaped carbon structure of the present invention include a thermally expanded graphite and a graphene aggregate. Among them, a graphene aggregate is preferable. A significance of the thermally expanded graphite and the graphene aggregate is as described above. However, in the present invention, the carbon binder is not limited as long as it can form a nanocarbon structure and can fully maintain and exhibit its function as a reflector for a cold neutron or an extremely cold neutron even after the nanocarbon structure is formed. If it is such a carbon binder, carbon materials other than the thermally expanded graphite and the graphene aggregate can also be used as carbon binders.

### (Mixing)

A method of mixing a nanocarbon structure and a carbon binder is not particularly limited, and it can be performed according to a conventional method. The mixing can be performed, for example, by mixing a nanocarbon structure and a carbon binder using a ball mill or the like. Moreover, in a case where a carbon binder is a graphene aggregate, the three-dimensional shaped carbon structure can be produced by, with graphene dispersed in a solvent such as alcohol and the like during the producing process, adding a nanocarbon structure to the solvent and mixing them, and then removing the solvent.

### (Compounding ratio)

A compounding ratio of a nanocarbon structure and a carbon binder when mixing them is, as a mass ratio of the nanocarbon structure to the carbon binder, preferably 5.0 or less, more preferably 4.5 or less, further preferably 4.0 or less, further preferably 3.5 or less, from the viewpoint of ensuring formability. On the other hand, the compounding ratio is preferably 1.0 or more, more preferably 1.5 or more, further preferably 2.0 or more, further preferably 2.5 or more, from the viewpoint of enhancing a strength of a cold neutron or an extremely cold neutron.

### (Molding)

The mixture thus obtained can be molded by filling a mold corresponding to a shape of a three-dimensional shaped carbon structure that is a target object with the mixture and applying a desired load. With such operations, the nanocarbon structure is bonded by the carbon binder, forming a three-dimensional shaped carbon structure. In this case, the mold is preferably one equipped with a vacuum suction mechanism, and further, may be one equipped with a heating mechanism so that heat can be applied during load molding to perform hot pressing. As the molding method, various molding methods can be applied such as compression molding, inflation molding, Engel molding, extrusion molding, extrusion lamination molding, rotational molding, calendar molding, injection method, vacuum molding, stamping molding, sprayup method, slush molding, lamination molding, casting molding, injection molding, manual layering molding, low-pressure molding, transfer molding, foam molding, hand lay-up method, filament winding method, blow molding, powder molding, matched die molding, SMC method (sheet molding compound), T-die method, and the like.

When the mold is equipped with a vacuum suction mechanism, it is preferable to adjust a degree of vacuum inside the mold to 100 Pa or less before load molding. Moreover, when the mold is equipped with a heating mechanism, it is preferable to set a temperature of the mold to 50°C or higher before load molding. A load during load molding is preferably 2 to 100 kN/cm², more preferably 5 to 70 kN/cm², further preferably 7 to 50 kN/cm², further preferably 10 to 30 kN/cm². A time for load molding is preferably 0.5 to 20 minutes, more preferably 1 to 10 minutes, further preferably 1 to 5 minutes.

### (Cutting-out processing)

The three-dimensional shaped carbon structure molded into a certain shape can be used as it is, or, if desired, can be further cut out (sliced) into a carbon structure of a desired thickness. A thickness of such a carbon structure is not particularly limited, but may be, for example, 0.1 mm or more, 1.0 mm or more, 10 mm or more, or 100 mm or more. On the other hand, the thickness may be about 400 mm. A range of such a thickness may be, for example, 1 to 100 mm, or 1 to 50 mm. Then, such a cutting-out processing can be appropriately performed with a multi-wire saw or the like.

### (Producing method of raw material)

The nanocarbon structure serving as a raw material of the three-dimensional shaped carbon structure of the present invention and the graphene aggregate that is a carbon binder can be produced as follows.

### <<Nanocarbon structure>>

The nanocarbon material relating to the present invention can be produced, for example, by once calcining an organic compound such as a phenolic resin and the like, and then placing the calcined raw material in a sealed container made of a heat-resistant material to subject it to hot isostatic pressing (HIP) treatment in presence of an inert gas (e.g., argon gas).

### Organic compound

As the organic compound, any compound that can be carbonized by heating and baking can be used, for example: natural organic polymers such as starch, cellulose, protein, collagen, alginic acid, dammar, kovar, rosin, gutta berk, a natural rubber, and the like; semi-synthetic polymers such as a cellulosebased resin, cellulose acetate, cellulose nitrate, cellulose acetate butyrate, casein plastics, soy protein plastics, and the like; synthetic polymers such as a phenol resin, an urea resin, a melamine resin, a benzoguanamine resin, an epoxy resin, a diallyl phthalate resin, an unsaturated polyester resin, a bisphenol A type epoxy resin, a novolac type epoxy resin, a multifunctional epoxy resin, an alicyclic epoxy resin, an alkyd resin, an urethane resin, and the like, which are thermosetting resins, and such as a polyester resin (a polyethylene terephthalate (PET) resin, a polytrimethylene terephthalate resin, a polybutylene terephthalate resin, a polyethylene naphthalate resin, a polybutylene naphthalate resin, etc.), a vinyl chloride resin, polyethylene, polypropylene, polystyrene, and the like, which are thermoplastic resins; synthetic rubbers such as polyisoprene, butadiene, and the like; synthetic fibers such as nylon, vinylon, acrylic fiber, rayon, and the like; and others such as polyvinyl acetate, an ABS resin, an AS resin, an acrylic resin, polyacetal, polyimide, polycarbonate, a modified polyphenylene ether (PPE), polyarylate, polysulfone, polyphenylene sulfide, polyether ether ketone, a fluororesin, polyamide imide, a silicone resin, and the like. These organic compounds can be used alone, or two or more thereof can be used in combination.

In addition, petroleum pitch, coal pitch, petroleum coke, coal coke, carbon black, and activated carbon that are produced during refining of fossil fuels such as petroleum, coal, and the like, of course, but also waste plastics which are mixtures of the above-described various resins, waste PET bottles, waste wood, waste plants, food waste such as raw garbage and the like, etc. can also be used in the same manner as described above as organic compounds that are raw materials since introduction of a carbonization system has been promoted in various regions from the viewpoint of effective utilization of carbon in waste for creation of a resource-circulating type society.

### Calcination

Calcination is a step of heating/burning an organic compound, a raw material, to make it suitable for HIP treatment in advance. Calcination can be performed using an externally heated batch furnace with electricity, gas, or the like, a muffle furnace, a high continuous multi-tube furnace, an internally heated rotary kiln furnace, a rocking kiln furnace, or the like. Calcination is preferably performed in an inert atmosphere such as a nitrogen gas flow and the like at predetermined temperature rising rate and calcination temperature.

In general, an organic compound is heated, whereby polymerization progresses, and oxygen, nitrogen, and hydrogen atoms in the structure become thermodynamically unstable and are therefore released, whereby carbonization progresses. Thus, in most organic compounds, these reactions progress by heat treatment at about 300°C or higher, and they become calcined raw materials, in which carbon and a moderate amount of hydrogen, oxygen, nitrogen, etc. remain, at about 400°C or higher, so that, in the present invention, the organic compounds calcined in this manner can be used as the calcined raw materials.

In the present invention, the calcination temperature (the maximum temperature during calcination) is usually preferably 500°C to 1000°C, more preferably 550°C to 850°C, further preferably 600°C to 700°C. A calcination time depends on types and amounts of raw materials, and a calcination temperature, etc., but it is preferable that calcination is performed usually for about 1 to 6 hours. Appropriate calcination temperature and time can be determined based on an amount of residual hydrogen in the calcined raw materials. An appropriate amount of residual hydrogen in the calcined raw materials is usually about 6,500 ppm or more, preferably about 10,000 ppm or more, further preferably about 20,000 ppm or more, from the viewpoint of ensuring that gases such as hydrogen, hydrocarbons, carbon monoxide, water vapor, and the like necessary for a CVD reaction are sufficiently generated during the HIP treatment.

### Sealed container made of heat-resistant material

In the HIP treatment, calcined raw materials are placed in a sealed container made of a heat-resistant material. The container serves as a reaction vessel for causing a CVD reaction by gases such as hydrogen, hydrocarbons, carbon monoxide, water vapor, and the like generated from the calcined raw materials during the HIP treatment. A chemical reaction is caused without allowing reactant gas generated inside to diffuse to the outside, while maintaining an isotropic high pressure through gas pressure. Examples of the heat-resistant material constituting the container include ceramics such as alumina, magnesia, zirconia, and the like, metals such as iron, nickel, zirconium, platinum, and the like, etc., in addition to graphite. A graphite material is appropriate for a material of the container (e.g., crucible). When a graphite crucible is used as the container, an open porosity (apparent porosity) of the graphite material is preferably less than about 20%. This is because a concentration of the reaction gas in the container can be kept at a required level during the HIP treatment. Moreover, the graphite crucible is preferably a screw-type graphite crucible from the viewpoint of efficiently removing a product after the HIP treatment. In addition, examples of the screw type in the screw-type graphite crucible include a triangular screw (a screw whose threaded cross section is shaped like an equilateral triangle), a square thread, a trapezoidal thread, and the like. Among them, a triangular thread is preferable.

### Hot Isostatic Pressing (HIP) treatment

The HIP treatment can be performed by placing calcined raw materials placed in a sealed container made of a heat-resistant material, together with the container, in a HIP treatment apparatus, and performing a HIP treatment in presence of an inert gas.

As the inert gas, an inert gas commonly used in this field, such as argon, nitrogen, and the like can be used.

A temperature during the HIP treatment is a temperature where the maximum arrival temperature is higher than a calcination temperature and is preferably about 900°C or higher, more preferably about 1000°C or higher, further preferably 1100°C or higher, further preferably 1200°C or higher. On the other hand, the maximum arrival temperature is about 2000°C, preferably 1900°C or lower, more preferably 1800°C or lower, further preferably 1600°C or lower to avoid damage to a target object due to etching by excited hydrogen. In addition, the maximum arrival temperature during the HIP treatment is usually preferably 100°C higher, more preferably 400°C higher than the calcination temperature. The maximum arrival pressure during HIP treatment varies depending on a particle size of a calcined raw material or the like, but is usually preferably about 1 MPa to about 300 MPa, more preferably in a range of about 10 MPa to about 200 MPa, preferably in a range of about 30 MPa to about 200 MPa. For example, when the particle size of the calcined raw material is large, a higher maximum arrival pressure is preferable, whereas, when the particle size is small, a lower pressure tends to be sufficient. In the HIP treatment, usually, from the viewpoint of production efficiency, it is desirable to first increase a pressure to a predetermined pressure so as not to scatter calcinated raw materials before increasing the temperature to near the calcination temperature (a pressure-first pattern), then increase the temperature to near the calcination temperature, and then, as necessary, increase the temperature and pressurize, allowing the temperature to reach the maximum arrival temperature and the pressure to reach the maximum arrival pressure. On the other hand, when the particle size is small, such as about 1 µm or less and the like, etc., the HIP treatment can be performed efficiently without particularly requiring such a pressure-first pattern as described above.

In the HIP treatment, the calcined raw materials are isotropically pressurized with an inert gas that is a pressure medium. Thus, in the initial stage of the HIP treatment, a high-pressure, high-density phase is formed by the inert gas around grains of the calcined raw materials. Thereafter, when the temperature for the HIP treatment becomes higher than the calcination temperature, gas generation from the calcined raw materials begins. However, as a diffusion coefficient of gas into a high-pressure, high-density pressure medium becomes small, high-concentration reactive gas regions (hydrogen, hydrocarbon, carbon monoxide, etc.) are formed around the calcined raw materials. Since the HIP treatment is an isotropic pressurization, the reaction gas regions are formed uniformly on outer surfaces of particles and analogously into shapes of the particles.

In these reactive gas regions, when the temperature for the HIP treatment becomes even higher, specifically about 900°C or higher, a so-called thermal CVD (Chemical Vapor Deposition) reaction occurs, precipitating a vapor phase growth graphene. A CVD reaction, which is generally performed by supplying a reactive gas to a surface of a substrate using a CVD apparatus or a plasma CVD apparatus, can be performed in reactive gas regions generated around the calcined raw materials inside a container made of a heat-resistant material using a HIP apparatus.

Moreover, regarding particle sizes of the calcined raw materials used, the CVD reaction mainly occurs on the surfaces of the particles, and therefore, when the particle size is large, a ratio of a surface area to a volume becomes small, and an amount of a vapor phase growth graphene in the resulting material is reduced. Thus, it is preferable to use a raw material having a small particle size, because a production ratio of the vapor phase growth graphene can be increased. From the viewpoint of production efficiency, when using a spherical resin, it is preferable to use one having a (average) particle size of about 100 µm or less. In addition, when using, as a raw material, a resin that once melts during a calcination process (for example, a thermoplastic resin or the like), raw materials after the calcination have only to be pulverized in advance and classified to obtain calcined raw materials of desired sizes before being subjected to the HIP treatment. For example, a thermoplastic resin is obtained as a foam (a brittle, sponge-like substance) after calcination, and therefore, the foam is pulverized in advance and then classified to obtain a calcined raw material of a desired size before being subjected to the HIP treatment.

Through the HIP treatment above, a nanocarbon structure having a petal-shaped structure and/or a projected-and-recessed structure can be obtained.

### <<Carbon binder>>

Among carbon binders, a thermally expanded graphite can be produced, for example, by rapidly heating a graphite intercalation compound and expanding a graphite particle, formed by overlapping carbon hexagonal network surfaces, several hundred times in a thickness direction thereof.

Moreover, a graphene aggregate can be prepared, for example, by dropping a graphene dispersion liquid, in which a single layer or multiple layers of graphene are dispersed in a solvent containing a lower alcohol (e.g., isopropyl alcohol) or water, onto a filter paper, depositing the graphene while separating the solvent, drying the deposit thus obtained to remove the solvent, and then, if desired, pulverizing it.

Here, the graphene dispersion liquid can be prepared by various methods. For example, it can be produced by heat-treating a graphite intercalation compound to obtain a thermally expanded graphite, immersing the thermally expanded graphite in isopropyl alcohol, subjecting the thermally expanded graphite to a crushing treatment with a homogenizer, and then separating a supernatant by centrifugation. Alternatively, in the above-described method, instead of the thermally expanded graphite, "a bulky graphene mass obtained by filling a graphite container with raw materials such as a phenolic resin powder and the like which have been calcined so as to contain residual hydrogen and subjecting the container to hot isostatic pressing treatment under an inert gas atmosphere" (WO 2011/102473) may be used to be immersed in isopropyl alcohol, and then the subsequent steps may be carried out. Alternatively, the thermally expanded graphite can be replaced with a "natural graphite particle (e.g., a high-purity natural graphite powder, an earthy graphite powder, or the like available from SEC CARBON, LIMITED and Nippon Graphite Industries, Co., Ltd.)".

Moreover, as the graphene dispersion liquid, for example, a graphene dispersion liquid "GF10IPA-D0N" manufactured by INCUBATION ALLIANCE, INC. can also be used.

The multilayer graphene constituting the graphene aggregate is not particularly limited as long as it can be used as the carbon binder of the present invention, and one produced by other methods other than the above-described method can also be used.

### <Other producing methods>

The three-dimensional shaped carbon structure of the present invention may be one produced by other methods other than the above-described method, as long as it comprises a predetermined petal-shaped structure and/or a predetermined projected-and-recessed structure. Moreover, such other producing methods do not necessarily have to use carbon binders.

### <Application>

The three-dimensional shaped carbon structure of the present invention thus obtained is useful as a reflector for a cold neutron or an extremely cold neutron, and can be used in a wide range of fields such as material structural analysis, life science, medicine, and the like.

### EXAMPLES

Although the present invention will be described based on Examples, it is not limited to Examples.

### <Material used in Production example>

Resin: Bellpearl R800 (spherical phenolic resin manufactured by Air Water Bellpearl Inc., average particle size: 15 µm)
Expandable graphite: SS-3 (manufactured by AIR WATER PERFORMANCE CHEMICAL INC.)

### <Production example>

### Production example 1 (Nanocarbon structure)

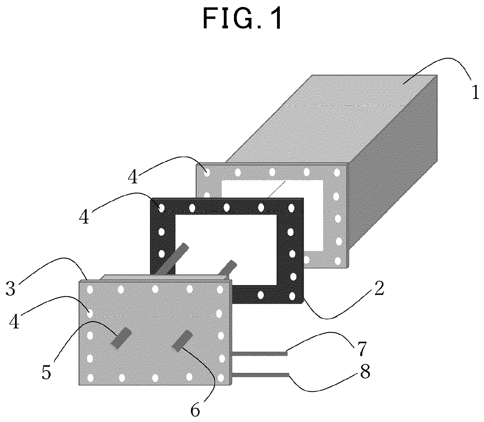

A nanocarbon structure was prepared according to the description in Table 1. That is, resin that is a raw material resin was charged in an artificial graphite crucible (extrusion type PSG-12 manufactured by TOHO CARBON CO., LTD.), the crucible was loaded into a stainless steel muffle equipped with an introducing/discharging piping for an atmospheric gas, and the muffle was installed in a small box furnace (KBF828N1) manufactured by Koyo Thermosystem Co., Ltd. The structure of the stainless steel muffle is shown in FIG. 1. The muffle is composed of a muffle body 1, a heat-resistant rubber (for sealing) 2, and a muffle lid 3, each of which having a screw hole for fixing 4. The muffle lid 3 has an atmospheric gas introducing port 5 and an atmospheric gas discharging port 6, and by flowing the atmospheric gas at 2 to 3 L/min, oxidation of the resin and carbide during calcination is prevented, and generated gases such as water vapor, carbon dioxide, carbon monoxide, nitrogen oxides, a tar-like low-boiling point hydrocarbon, and the like, which are generated during calcination, are discharged, allowing stable calcination to be performed. A water cooling piping is embedded inside the muffle lid 3, and water cooled by a chiller is circulated through a cooling water inlet 7 and a cooling water outlet 8 to prevent the muffle lid 3 and the small box furnace from overheating. A temperature of the small box furnace was increased with a temperature rising rate in a temperature range of room temperature to 150°C being as 300°C/h (moisture absorbed or adsorbed in the resin is removed mainly in this step), with a temperature rising rate in a temperature range of 150°C to 400°C being as 15°C/h (elements such as hydrogen, oxygen, nitrogen, sulfur, and the like in a chemical structure of the resin are gasified mainly in this step), and with a temperature rising rate in a temperature range of 400°C to a calcination temperature being as 20°C/h (carbonization begins to progress mainly in this step), and after reaching a predetermined calcination temperature, the resin was calcined at that calcination temperature for 5 hours.

The calcined resin (powder) was loaded into an artificial graphite crucible (material: CIP material MGY-71 manufactured by TOHO CARBON CO., LTD.) that can be sealed with a screw-type top lid, loaded into a hot isostatic pressing apparatus (O2-Dr. HIP manufactured by Kobe Steel, Ltd.), and subjected to heating and pressurizing treatment (HIP treatment). Using argon as a gas medium, the temperature was increased at a temperature rising rate of 600°C/h while performing vacuum drawing for the temperature range of room temperature to 200°C, and the temperature was increased at a temperature rising rate of 450°C/h for a temperature range of 200°C to 500°C, at a temperature rising rate of 850°C/h for a temperature range of 500°C to 900°C, and at a temperature rising rate of 750°C/h for a temperature range of 900°C to the maximum arrival temperature and their pressures were increased at the same time, and after reaching predetermined maximum arrival temperature and maximum arrival pressure, the resin was retained at the temperature and the pressures for a predetermined time to perform HIP treatment. The results are described in Table 1.

**Table 1**

| | Calcination | | | HIP treatment | | | SEM observation |
|---|---|---|---|---|---|---|---|
| | Material | | Temperature (°C) | Maximum arrival temperature (°C) | Maximum arrival pressure (MPa) | Retention time (Hr) | |
| | Resin | Aspect ratio | | | | | |
| Nanocarbon structure 1 | R800 | 1 | 650 | 1300 | 70 | 0 | FIGS, 2, 3 |
| Nanocarbon structure 2 | R800 | 1 | 650 | 1390 | 60 | 1 | FIGS. 4 to 12 |

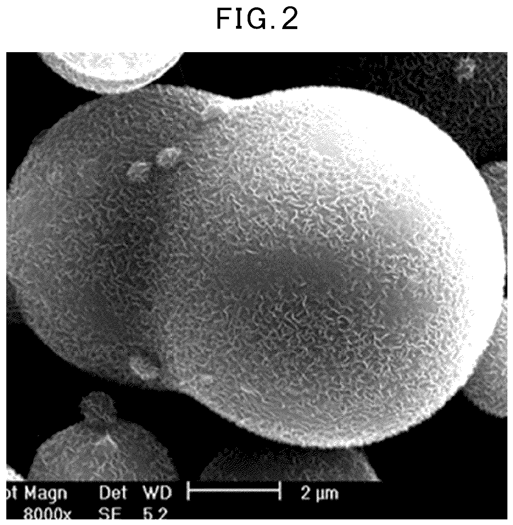

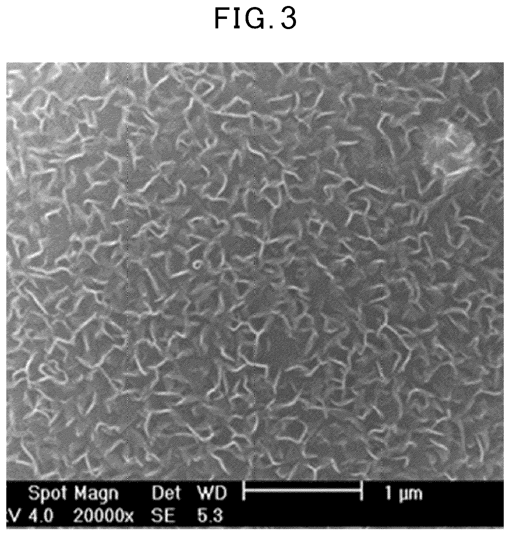

SEM images of the nanocarbon structure 1 are shown in FIG. 2 and FIG. 3. In FIG. 2, petal-shaped structures are observed. On the other hand, no generation of a projected-and-recessed structure was observed. Besides, FIG. 3 is an enlarged view of a portion where generation of flaky carbons were observed in FIG. 2.

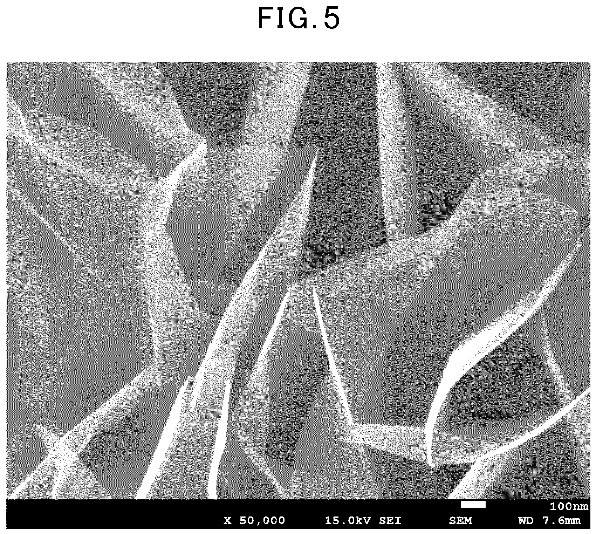

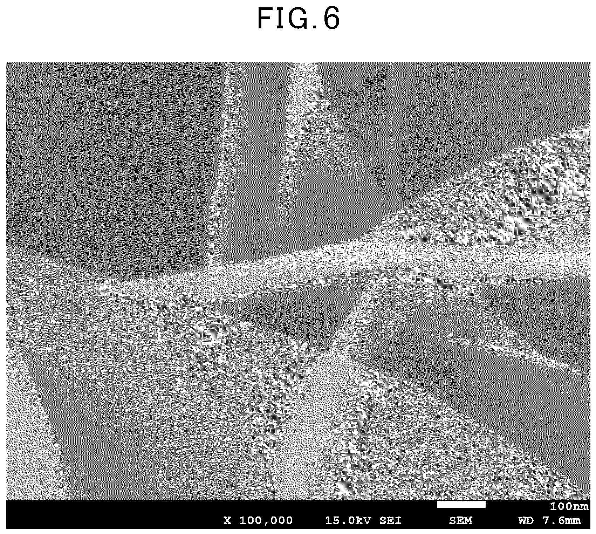

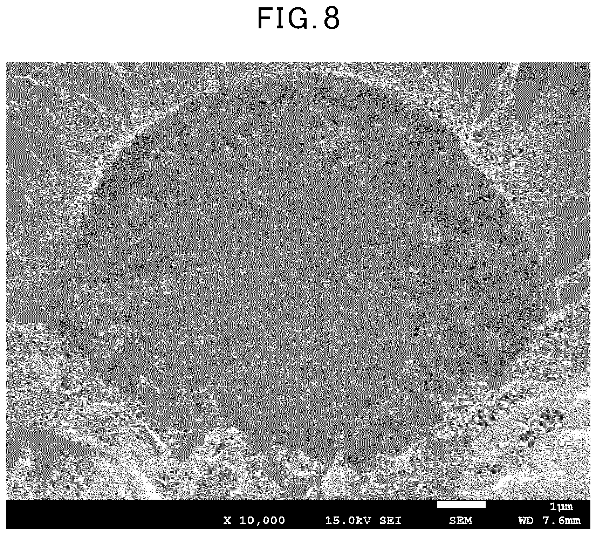

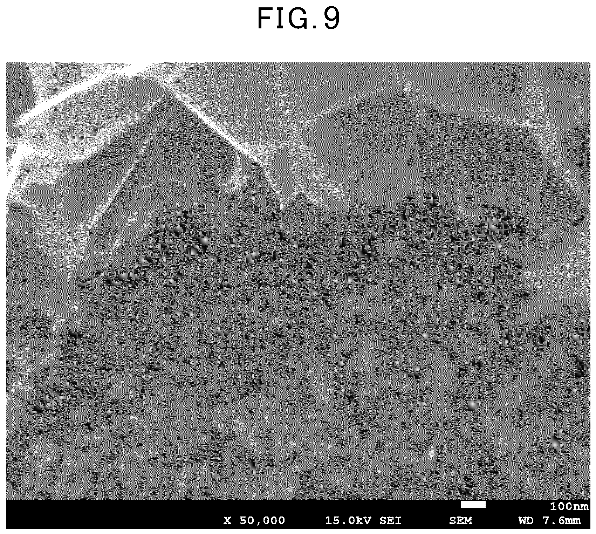

On the other hand, SEM images of the nanocarbon structure 2 are shown in FIG. 4 to FIG. 12. In FIG. 4, it can be observed that petal-shaped structures, which reflect a spherical shape of a raw material resin and in which flaky carbons are fixed into a petal shape from the surface of the sphere, are noticeably generated. FIGS. 5 and 6 are photographs of the petal-shaped structure enlarged 50,000 times and 100,000 times, respectively. Referring to the 100 nm scale bar in the photographs, it can be seen that a thickness of one of flaky carbons constituting the petal-shaped structure is less than 20 nm. Moreover, from FIGS. 7 and 8, a projected-and-recessed structure can be observed which was formed by an assembly of seed-shaped structures inside a carbon sphere generating the petal-shaped structure on its surface. FIGS. 9 to 12 show enlarged photographs of the generated projected-and-recessed structure. With reference to the 100 nm scale bar in these figures, it can be observed that the projected-and-recessed structure is a fine structure formed by an assembly of seed-shaped structures with a size of 1 to 100 nm. Besides, FIG. 12 is an enlarged view of the enclosed part in FIG. 11.

### Production example 2 (Carbon binder)

### Production example 2-1 (Thermally expanded graphite)

5 g of thermally expandable graphite (SS-3) was placed in an artificial graphite crucible (extrusion type, model number: PSG-12, manufactured by TOHO CARBON CO., LTD.), and the crucible was loaded into an electric furnace with a furnace temperature set at 750°C, and retained for 10 minutes to obtain 4.5 g of thermally expanded graphite that has expanded several hundred times in a thickness direction of a graphite particle. Besides, the obtained thermally expanded graphite was collected in an aluminum measuring cup with a volume of 100 cm³, and, using a glass rod with an outer diameter of 10 mm, the top of the cup was rubbed off to remove excess thermally expanded graphite, thereby obtaining a thermally expanded graphite of 100 cm³ in volume. Then, using an analytical electronic balance HTR-80 (manufactured by SHINKO DENSHI CO.,LTD., analytical accuracy: 0.1 mg), a weight of 100 cm³ of thermally expanded graphite was measured. A tap density was calculated by dividing the measured weight by the volume (100 cm³) and found to be 0.018 g/cm³.

### Production example 2-2 (Graphene aggregate)

4 g of thermally expanded graphite as obtained above was immersed in 500 ml of isopropyl alcohol in a glass beaker and then subjected to a crushing treatment for 15 minutes × 8 times with the number of rotations at 12,500 rpm using a universal homogenizer (Physcotron NS52, manufactured by MICROTEC CO., LTD.). An ultrasonic oscillator of an ultrasonic homogenizer (US300T manufactured by NIPPON SEIKI CO., LTD.) was charged into the crushed product, which was subjected to an ultrasonic treatment for 10 minutes × 20 times at an output of 70% to pulverize the thermally expanded graphite particles and release graphenes (including single layered graphenes, as well as multiple layered graphenes). The obtained mixed liquid was left to stand for 12 hours, and the supernatant was collected to obtain a graphene dispersion liquid. 50 g of the obtained graphene dispersion liquid was collected in an aluminum cup whose surface was alumite-treated. The graphene dispersion liquid was retained at 90°C for 20 hours, then, a mass of the solid content was measured. A solid content was calculated by mass ratio to the dispersion liquid and found to be 0.8% by mass.

A filter paper (Quantitative filter paper 5A manufactured by ADVANTEC TOYO KAISHA, LTD.) was loaded into a Buchnaroto, and the graphene dispersion liquid as obtained above was gradually added dropwise while decompressing with an aspirator to separate graphene from isopropyl alcohol, depositing graphene on the filter paper. The deposit was air-dried at room temperature for 5 hours and then dried in an electric furnace set at 90°C for 8 hours to completely remove isopropyl alcohol, obtaining a solid (a deposit of graphene). The solid was pulverized into a coarse particle for a pulverizing time of 15 minutes using a universal pulverizer (M20 manufactured by AS ONE Corporation) and classified using a stainless steel sieve with an aperture of 100 µm to obtain a graphene aggregate under 100 µm.

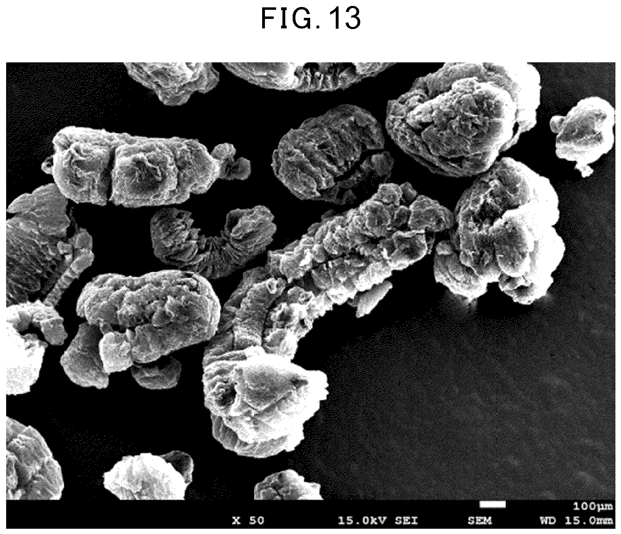

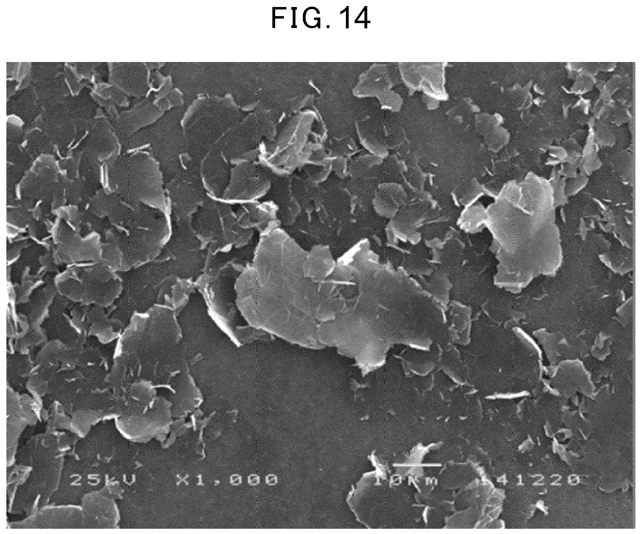

FIG. 13 shows an SEM image of a thermally expanded graphite, and FIG. 14 shows an SEM image of a graphene aggregate.

### <Material used in Examples>

Nanocarbon structure 1: Nanocarbon structure produced in Production example 1
Nanocarbon structure 2: Nanocarbon structure produced in Production example 1
Carbon binder 1: Thermally expanded graphite produced in Production example 2-1 (tap density: 0.018 g/cm³)
Carbon binder 2: Graphene aggregate produced in Production example 2-2

### <Example>

### (Three-dimensional shaped carbon structure)

Using a nanocarbon structure and a carbon binder, a three-dimensional shaped carbon structure was prepared according to the description in Table 2. For example, a three-dimensional shaped carbon structure 7 was obtained by charging the nanocarbon structure 2 and the carbon binder 2 into a plastic container, thoroughly mixing them by shaking well, and then pressure-molding them under a load of 30 kN using a metal mold (disk-shaped with an outer diameter of 25 mm).

Similarly, the nanocarbon structure 1 alone, the nanocarbon structure 2 alone, the carbon binder 2 alone, a mixture of the nanocarbon structure 1 and the carbon binder 1, a mixture of the nanocarbon structure 1 and the carbon binder 2, and a mixture of the nanocarbon structure 2 and the carbon binder 1 were pressure-molded under conditions of 20 to 30 kN, etc., thereby obtaining three-dimensional shaped carbon structures 1 to 6, respectively, in this order.

The three-dimensional shaped carbon structure 1 obtained by molding the nanocarbon structure 1 alone and the three-dimensional shaped carbon structure 2 obtained by molding the nanocarbon structure 2 alone were very fragile and could not be molded successfully. The three-dimensional shaped carbon structure 3 obtained by molding the carbon binder 2 alone had a good formability.

The three-dimensional shaped carbon structure 4 obtained by molding a mixture of the nanocarbon structure 1 and the carbon binder 1 having a large forming power (thermally expanded graphite) had many fine cracks therein and became a somewhat non-uniform molded body. The three-dimensional shaped carbon structure 5 obtained by molding a mixture of the nanocarbon structure 1 and the carbon binder 2 (graphene aggregate) had cracks in the molded body, possibly due to somewhat insufficient growth of a flaky carbon on the surface of the nanocarbon structure 1. The three-dimensional shaped carbon structure 6 obtained by molding a mixture of the nanocarbon structure 2 and the carbon binder 1 (thermally expanded graphite) was also observed to have fine cracks therein. As described above, the three-dimensional shaped carbon structures 4 to 6 were observed to be somewhat non-uniform and have cracks in the molded bodies, but they were sufficiently formable.

The three-dimensional shaped carbon structure 7 obtained by molding a mixture of the nanocarbon structure 2 and the carbon binder 2 exhibited a good formability.

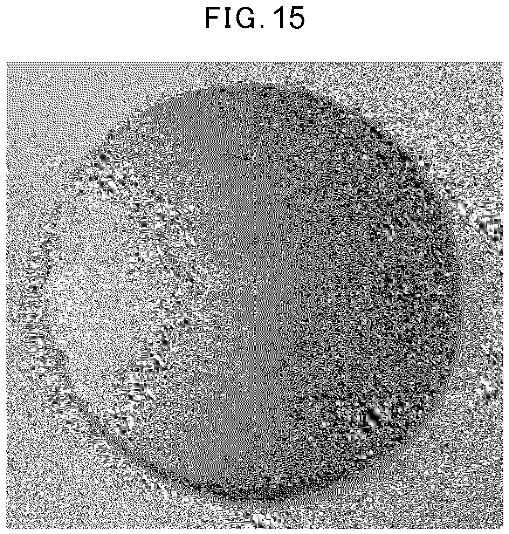

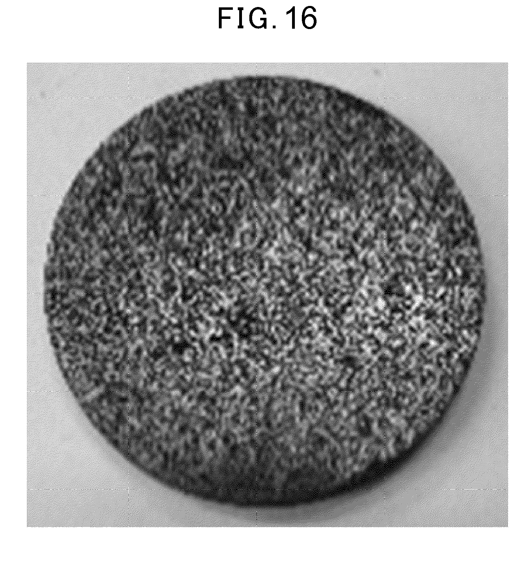

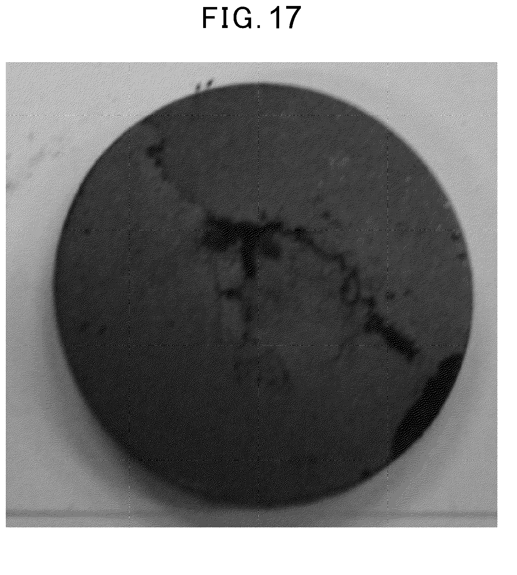

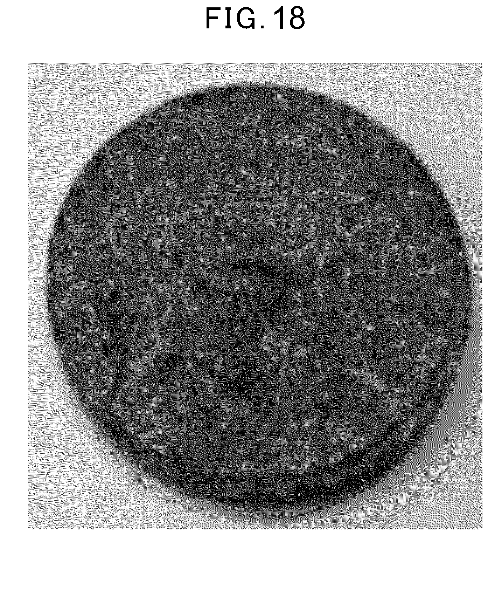

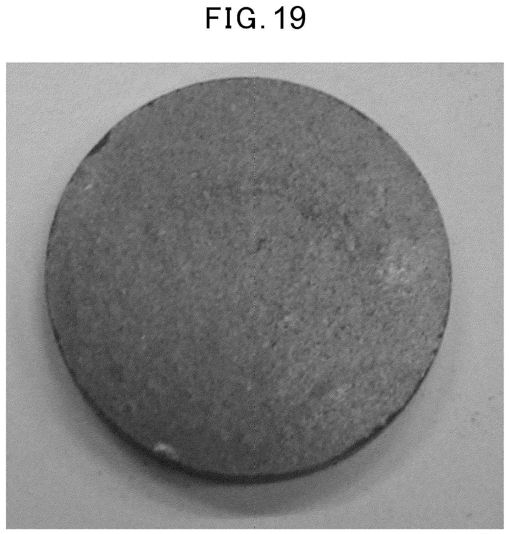

Besides, results (photographs) from visual observation of the three-dimensional shaped carbon structures 3 to 6 are shown in FIGS. 15 to 19.

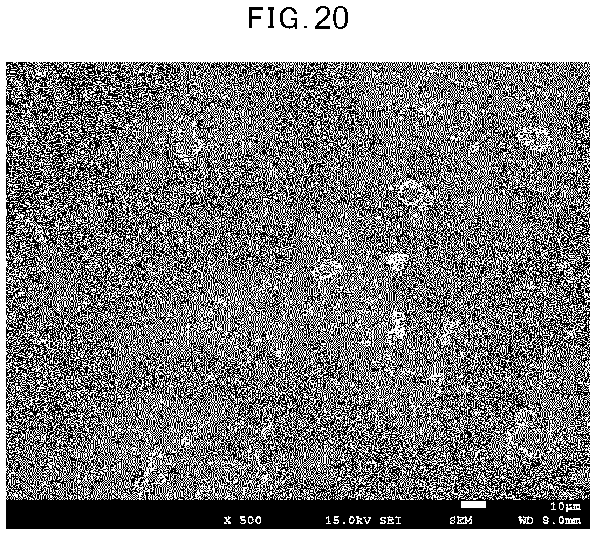

Moreover, FIGS. 20 to 25 show results (SEM images) of the three-dimensional shaped carbon structures 4, 6, and 7 as observed with a scanning electron microscope (SEM).

FIG. 20 is an SEM image of the three-dimensional shaped carbon structure 4. It can be observed that the petal-shaped structures derived from the nanocarbon structure 1 is covered with the carbon binder. However, it is estimated that petal-shaped structures are present inside.

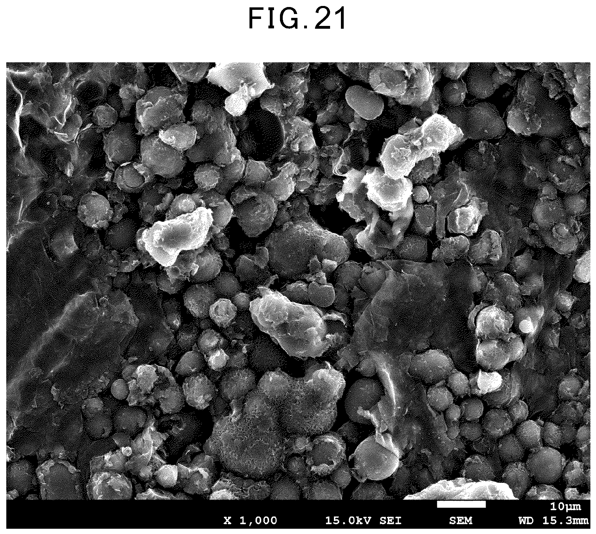

FIG. 21 is an SEM image of the three-dimensional shaped carbon structure 6. Regions are observed where petal-shaped structures derived from the nanocarbon structure 2 and projected-and-recessed structures are covered with the carbon binder, but regions where they are not covered therewith are also observed.

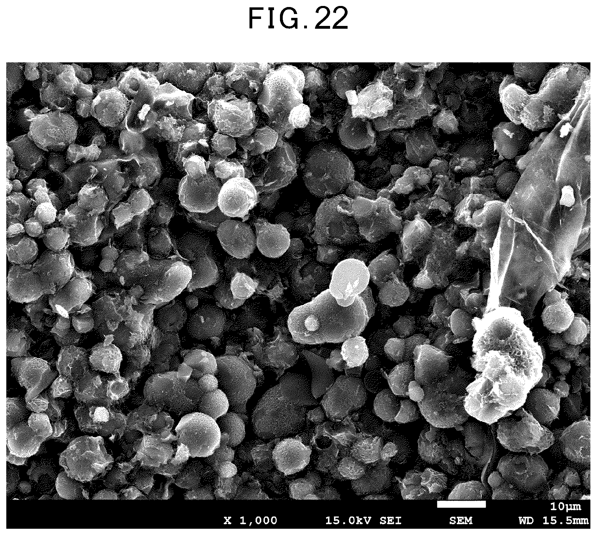

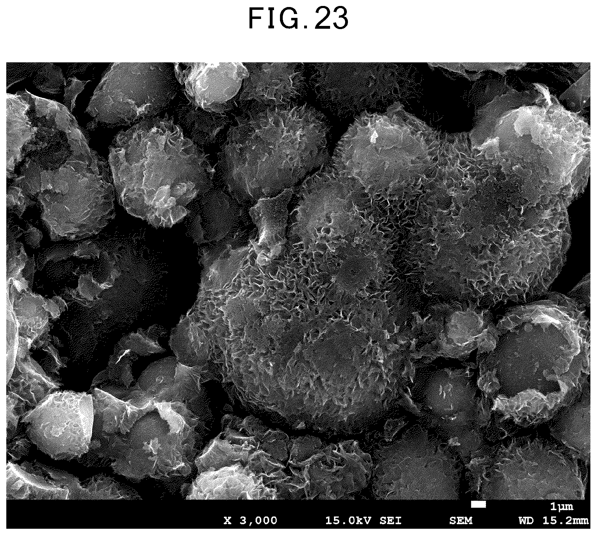

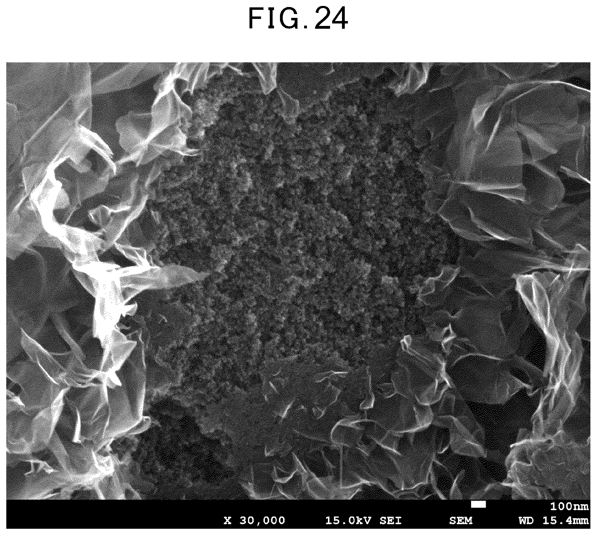

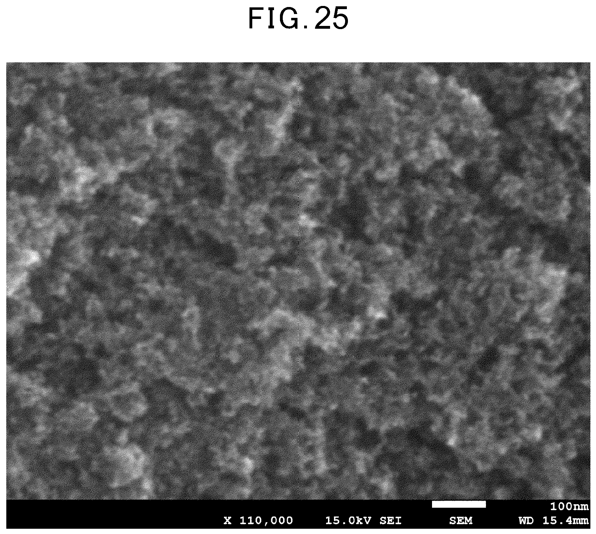

FIG. 22 is an SEM image of the three-dimensional shaped carbon structure 7. Regions where petal-shaped structures derived from the nanocarbon structure 2 and projected-and-recessed structures are not covered with the carbon binder are more observed than those in FIG. 21. FIGS. 23 to 25 show further enlarged SEM images. In FIG. 23, the petal-shaped structures and the projected-and-recessed structures are observed, and FIGS. 24 and 25 show further enlarged SEM images of the projected-and-recessed structures.

**Table 2**

| Three-dimensional shaped carbon structure | | | 1 | 2 | 3 | 4 | 5 | 6 | 7 |
|---|---|---|---|---|---|---|---|---|---|
| Pressure molding | Mass ratio | Nanocarbon Structure 1 | 4 | - | - | 3 | 3 | - | - |
| | | Nanocarbon Structure 2 | - | - 4 | - | - | - | 3 | 3 |
| | | Carbon binder 1 | - | - | - | 1 | - | 1 | - |
| | | Carbon binder 2 | - | - | 4 | - | 1 | - | 1 |
| Three-dimensional shaped carbon structure | Molding status | | Fragile | Fragile | Good | Non-uniform | Non-uniform | Non-uniform | Good |
| | Outer diameter (mm) | | - | - | 25.3 | 25.3 | 25.3 | 25.6 | 25.7 |
| | Thickness (mm) | | - | - | 2.98 | 2.60 | 2.50 | 3.02 | 3.09 |
| | Weight (g) | | - | - | 1.50 | 1.42 | 1.23 | 1.41 | 1.43 |
| | Bulk density (g/cm³) | | - | - | 1.00 | 1.09 | 0.98 | 0.91 | 0.91 |
| | Visual observation | | - | - | FIG. 15 | FIG. 16 | FIG. 17 | FIG. 18 | FIG. 19 |
| | SEM observation | | - | - | - | FIG. 20 | - | FIG. 21 | FIG. 22 to FIG. 25 |

Some out of the three-dimensional shaped carbon structures obtained above were analyzed by a microscopic laser Raman, and their bending strengths were also measured. The results are shown in Table 3. Besides, for the microscopic laser Raman, a highly crystalline graphite (Graphtec Corporation, SS400 (thickness: 240 µm), Reference example 2) and an artificial graphite plate (CIP material MGY-71 manufactured by TOHO CARBON CO., LTD., Reference example 3) were also evaluated as references.

### (Microscopic laser Raman)

Each carbon structure was analyzed by a Raman spectroscopic analyzer (XploRA manufactured by HORIBA, Ltd., excitation wavelength: 531.12 nm, Ar laser) to obtain a spectrum by Raman spectroscopy. From the spectrum, a G/D ratio serving as an index of crystallinity of sp2 carbon bonds (graphene structure), i.e., a ratio of a peak intensity of the G band to a peak intensity of the D band, and a G/2D ratio serving as an index of the small number of stacking layers of graphene, i.e., a ratio of a peak intensity of the G band to a peak intensity of the 2D band were calculated.

### (Bending strength)

For each carbon structure, a sample having a uniform disk shape with an outer diameter of 25 mm (thickness: about 2 to 4 mm) was prepared. For each sample, a load-displacement curve was measured, and the maximum load at which a material buckled was measured, under a condition of a distance between support points at 20 mm and a pushing speed at 10 mm/min, using a load testing device (ZTA-2500N) and a bending test unit (MX2) manufactured by IMADA CO., LTD. The maximum load thus obtained was divided by the cross-sectional area of the sample to calculate the maximum stress, which numerical value was taken as a bending strength. The sample in Example 1 buckled at a load of 6 N (bending strength: 1.0 MPa), and the sample in Example 3 buckled at a load of 12 N (bending strength: 1.6 MPa).

**Table 3**

| | Reference example | Example | | | Reference example | |
|---|---|---|---|---|---|---|
| | 1 | 1 | 2 | 3 | 2 | 3 |
| Three-dimensional shaped carbon Structure | 3 | 4 | 6 | 7 | Highly crystalline graphite | Artificial graphite plate |
| Bulk density (g/cm³) | 1.00 | 1.09 | 0.91 | 0.91 | 1.61 | 1.78 |
| G/D | 9.63 | 3.33 | 5.30 | 6.96 | 11.69 | 2.96 |
| G/2D | 3.38 | 2.73 | 2.40 | 1.93 | 3.26 | 2.94 |
| Bending strength (MPa) | - | 1.0 | 2.8 | 1.6 | - | - |

All of the three-dimensional shaped carbon structures in Examples have a higher G/D ratio and a lower G/2D ratio than the artificial graphite (Reference example 3) that is a general graphite material, which indicates that crystallinity of sp2 carbon bonds (graphene structure) is high and the structures are composed of the small number of stacking layers of graphene.

The three-dimensional shaped carbon structure 3 (Reference example 1) obtained by molding the carbon binder 2 alone exhibited a high G/D value, but it does not comprise any of petal-shaped structure and projected-and-recessed structure, and therefore, the structure had a large G/2D value of 3.38. Similarly, the highly crystalline graphite exhibited a high G/D value, but it had a large G/2D value of 3.26.

The three-dimensional shaped carbon structure 4 (Example 1) obtained by molding a mixture of the nanocarbon structure 1 and the carbon binder 1 (thermally expanded graphite) that has a large forming power had a higher G/D than the artificial graphite and a lower G/2D than the artificial graphite. The three-dimensional shaped carbon structure 6 obtained by molding a mixture of the nanocarbon structure 2 and the carbon binder 1 (thermally expanded graphite) also had a higher G/D than the artificial graphite and a lower G/2D than the artificial graphite (Example 2).

Furthermore, in the three-dimensional shaped carbon structure 7 obtained by molding a mixture of the nanocarbon structure 2 and the carbon binder 2, a lot of petal-shaped structures, each of them having flaky carbons fixed into a petal shape, and a lot of projected-and-recessed structures, each of them being formed by an assembly of seed-shaped structures with a size of 1 to 100 nm, were sufficiently grown on the particle surface of the nanocarbon structure 2, and a molded body was obtained in which the petal-shaped structures and the projected-and-recessed structures could be observed in large quantities in SEM images even after being compounded with graphene aggregates (Example 3). This G/D was higher than that in the other Examples, and the G/2D was lower than that in the other Examples. Moreover, the bending strength also exhibited a large value (1.6 MPa).

Regarding the SEM images of the three-dimensional shaped carbon structures in Examples 1 to 3 (FIGS. 20 to 25), in FIG. 20 (three-dimensional nanocarbon structure 4), the surface is completely covered with a carbon binder, and no petal-shaped structure can be observed, but it can be estimated that the petal-shaped structures are maintained underneath the carbon binder. This is because, in FIG. 21 (three-dimensional nanocarbon structure 6), petal-shaped structures and projected-and-recessed structures are observed in portions not covered with carbon binders. Furthermore, in FIG. 22 (three-dimensional nanocarbon structure 7) and FIGS. 23 to 25 that are enlarged views, it is clearly observed that petal-shaped structures and projected-and-recessed structures, while being maintained, are bound by a graphene aggregate that is a binder. FIGS. 22 and 23 show low-magnification SEM images, and FIGS. 24 and 25 show high-magnification SEM images, in particular, FIGS. 24 and 25 capture projected-and-recessed structures.

### (Neutron transmittance)

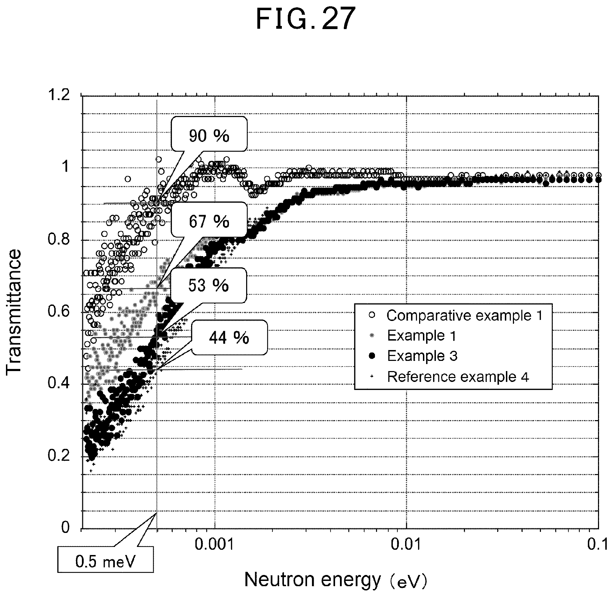

A neutron transmittance of each sample was measured as follows. That is, neutrons generated by the RIKEN small-neutron source system RANS (RIKEN Accelerator-driven compact Neutron Source) were slowed down by a mesitylene cold neutron moderator, further passed through a slit collimator to remove scattered neutrons from the surrounding area, while being focused into a neutron flux (beam) with a diameter of 10 mm, and then irradiated onto the sample. The sample was attached to a back side of a boron carbide (B₄C)-dispersed rubber mounted to a sample support frame, and the sample support frame was installed at a position about 1.5 m from the surface of the cold neutron moderator. A hole having a diameter of 10 mm was provided in the center of the boron carbide-dispersed rubber, and neutrons passing through the hole were uniformly transmitted through the sample. A GEM (Gas Electron Multiplier) detector was installed approximately 100 mm past the sample, and intensities of neutron energy dependence of neutron beams that passed through the sample were measured. A transmittance (%) of neutron energy dependence was calculated from a ratio between cases with and without the sample. The transmittance was normalized to a value per atom based on a thickness and a density of the sample. Besides, all atoms present were defined as carbon. The results are shown in FIG. 27.

### <<Overview of RANS>>

Accelerated ions: Proton
Neutron-generating nuclear reaction: ⁹Be(p, n)⁹B
Maximum neutron energy: 5 MeV
Acceleration method: RFQ+DTL

Samples used in the experiment are as follows. A thickness, a density, and a transmittance (%) at 0.5 meV of each of the samples are shown in Table 4. Moreover, from FIG. 27, a neutron transmittance of each sample when a neutron energy was 0.5 meV was visually read. The results are shown in Table 4.
Structure 4: Three-dimensional shaped carbon structure 4 Structure 7: Three-dimensional shaped carbon structure 7
Graphite: Isotropic graphite manufactured by TOYO TANSO CO., LTD. (bulk density: 1.77 g/cm³)
Nanodiamond: ND plate (ND plate prepared in "M. Teshigawara et al. (2019). Measurement of neutron scattering cross section of nano-diamond with particle diameter of approximately 5 nm in energy range of 0.2 meV to 100 meV. Nuclea Inst. and Methods Physics Reserch, A 929, 113-120.")

**Table 4**

| | Example | | Comparative example | Reference example |
|---|---|---|---|---|
| | 1 | 3 | 1 | 4 |
| Sample | Structure 4 | Structure 7 | Graphite | Nanodiamond |
| Thickness (cm) | 0.26 | 0.32 | 0.19 | 0.12 |
| Bulk density (g/cm³) | 1.09 | 0.91 | 1.77 | 0.65 |
| Transmittance at 0.5 meV (%) | 67 | 53 | 90 | 44 |

Energy-dependent neutron transmittance profiles for the structure 4 in Example 1 and the structure 7 in Example 3 are close to the profile of the nanodiamond in Reference example 4 and have significantly lower transmittance than the graphite in Comparative example 1 (a graphite material having the equivalent bulk density as the artificial graphite plate in Reference example 3). Such a low transmittance is considered to be derived from coherent scattering. Thus, the three-dimensional shaped carbon structures in Examples are considered to be useful as reflectors for cold neutrons for achieving high strengths of the cold neutrons. Moreover, the results from the energy-dependent neutron transmittance profiles in FIG. 27 indicate that a low transmittance can be expected not only for a cold neutron but also for an extremely cold neutron.

Preferred embodiments of the present invention are described below.

[1] A three-dimensional shaped carbon structure comprising a nanocarbon structure, the nanocarbon structure comprising at least one of:
   a petal-shaped structure with flaky carbons fixed into a petal shape, each of the flaky carbons having a graphene skeleton and a thickness of less than 20 nm, and
   a projected-and-recessed structure formed by an assembly of seed-shaped structures, each of the seed-shaped structures having a size of 1 to 100 nm.
[2] The three-dimensional shaped carbon structure of [1] above, wherein the nanocarbon structure comprises both the petal-shaped structure and the projected-and-recessed structure.
[3] The three-dimensional shaped carbon structure of [1] or [2] above, further comprising a carbon binder.
[4] The three-dimensional shaped carbon structure of [3] above, wherein the carbon binder comprises at least one of a thermally expanded graphite and a graphene aggregate.
[5] The three-dimensional shaped carbon structure of [3] above, wherein the carbon binder comprises a graphene aggregate.
[6] The three-dimensional shaped carbon structure of any one of [1] to [5] above, wherein the carbon structure has a thickness of 0.1 mm or more.
[7] The three-dimensional shaped carbon structure of any one of [1] to [6] above, wherein the carbon structure has a bending strength of 0.5 MPa or more.
[8] The three-dimensional shaped carbon structure of any one of [1] to [7] above, wherein the carbon structure has a bulk density of 0.70 g/cm³ or more.
[9] The three-dimensional shaped carbon structure of any one of [1] to [8] above, wherein a ratio G/D of a peak intensity of the G band to a peak intensity of the D band as obtained by Raman spectroscopy is 3.00 or more and a ratio G/2D of the peak intensity of the G band to a peak intensity of the 2D band is 3.00 or less.
[10] The three-dimensional shaped carbon structure of any one of [1] to [9] above, wherein the three-dimensional shape is a plate shape, a disk shape, a tube shape, or a shape of a divided piece obtained by dividing the tube shape.
[11] The three-dimensional shaped carbon structure of any one of [1] to [10] above, wherein the carbon structure has a neutron transmittance of 80% or less for 0.5 meV neutrons.

### REFERENCE SIGNS LIST

1. Muffle body
2. Heat-resistant rubber (for sealing)
3. Muffle lid
4. Screw hole for fixing
5. Atmospheric gas introducing port
6. Atmospheric gas discharging port
7. Cooling water inlet
8. Cooling water outlet

## Claims

1. A three-dimensional shaped carbon structure comprising a nanocarbon structure, the nanocarbon structure comprising at least one of:
a petal-shaped structure with flaky carbons fixed into a petal shape, each of the flaky carbons having a graphene skeleton and a thickness of less than 20 nm, and
a projected-and-recessed structure formed by an assembly of seed-shaped structures, each of the seed-shaped structures having a size of 1 to 100 nm.

2. The three-dimensional shaped carbon structure of claim 1, wherein the nanocarbon structure comprises both the petal-shaped structure and the projected-and-recessed structure.

3. The three-dimensional shaped carbon structure of claim 1 or 2, further comprising a carbon binder.

4. The three-dimensional shaped carbon structure of claim 3, wherein the carbon binder comprises at least one of a thermally expanded graphite and a graphene aggregate.

5. The three-dimensional shaped carbon structure of claim 3, wherein the carbon binder comprises a graphene aggregate.

6. The three-dimensional shaped carbon structure of claim 1 or 2, wherein the carbon structure has a thickness of 0.1 mm or more.

7. The three-dimensional shaped carbon structure of claim 1 or 2, wherein the carbon structure has a bending strength of 0.5 MPa or more.

8. The three-dimensional shaped carbon structure of claim 1 or 2, wherein the carbon structure has a bulk density of 0.70 g/cm³ or more.

9. The three-dimensional shaped carbon structure of claim 1 or 2, wherein a ratio G/D of a peak intensity of the G band to a peak intensity of the D band as obtained by Raman spectroscopy is 3.00 or more and a ratio G/2D of the peak intensity of the G band to a peak intensity of the 2D band is 3.00 or less.

10. The three-dimensional shaped carbon structure of claim 1 or 2, wherein the three-dimensional shape is a plate shape, a disk shape, a tube shape, or a shape of a divided piece obtained by dividing the tube shape.

11. The three-dimensional shaped carbon structure of claim 1 or 2, wherein the carbon structure has a neutron transmittance of 80% or less for 0.5 meV neutrons.
